# EUROPÄISCHE PATENTSCHRIFT

(11) **EP 2 569 147 B1**
(45) Veröffentlichungstag und Bekanntmachung des Hinweises auf die Patenterteilung: **02.03.2016**
(21) Anmeldenummer: 11723328.8
(22) Anmeldetag: 10.05.2011
(51) Int. Cl.: B29D 30/00, B29D 30/06, B29D 30/56, B29C 31/08, B29C 43/02

(54) **VULKANISIERPRESSENANLAGE UND VERFAHREN ZUM BESCHICKEN EINER VULKANISIERPRESSE**
VULCANIZING PRESS SYSTEM AND METHOD TO FEED A VULCANIZING PRESS
INSTALLATION DE PRESSE À VULCANISER ET PROCÉDÉ POUR CHARGER UNE PRESSE DE VULCANISATION

(30) Priorität: 11.05.2010 DE 102010020060
(43) Veröffentlichungstag der Anmeldung: 20.03.2013
(73) Patentinhaber: Siempelkamp Maschinen- und Anlagenbau GmbH, 47803 Krefeld (DE)
(72) Erfinder: AUMÜLLER, Steffen, 41464 Neuss (DE)
(74) Vertreter: von dem Borne, Andreas
(86) Internationale Anmeldenummer: PCT/EP2011/057553
(87) Internationale Veröffentlichungsnummer: WO 2011/141479

(56) Entgegenhaltungen:
- EP-A2- 0 410 628
- EP-A2- 1 609 597
- DE-A1- 2 207 828
- DE-A1- 2 550 607
- DE-A1- 2 846 006
- GB-A- 919 803
- JP-A- 11 034 094
- US-A1- 2007 023 963

## Beschreibung

Die Erfindung betrifft eine Vulkanisierpressenanlage für die Herstellung von Laufstreifen für die Runderneuerung von Reifen,
mit einer Vulkanisierpresse mit einem Pressengestell und einer oder mehreren Pressenetagen, in welchen aus Rohgummistreifen Laufstreifen mit einem Reifenprofil gepresst werden und
mit zumindest einer Beschickvorrichtung für die Beschickung der Vulkanisierpresse mit den Rohgummistreifen.

Die Runderneuerung von Reifen spielt in der Praxis eine große Rolle. Runderneuerung meint im Rahmen der Erfindung bevorzugt die Reifenrunderneuerung im Kaltverfahren, welches insbesondere bei der Runderneuerung von LKW-Reifen eingesetzt wird. Dabei werden in einem Extruder Rohgummistreifen vorgeformt, die dann beispielsweise in Rollenform gelagert werden. Die Vulkanisierpresse ist mit beheizbaren Formen ausgerüstet, welche im Zuge des Pressens das Reifenprofil in die Rohgummistreifen unter Bildung der Laufstreifen einbringen. Die Vulkanisierpresse, die auch als Laufstreifenpresse bezeichnet wird, und beispielsweise als offene C-Presse mit einer einseitigen Maulkonstruktion oder auch als "Doppel-C-Presse" mit einer zweiseitigen Maulkonstruktion ausgebildet sein kann und welche in der Regel mehrere Etagen aufweist, wird von der Kopfseite mit den Rohgummistreifen beladen, indem die Rohgummistreifen in die einzelnen Pressenetagen gezogen werden.

Aus der Praxis kennt man eine solche Vulkanisierpressenanlage, bei der die Beschickvorrichtung einen verfahrbaren Beladearm aufweist, welcher die beispielsweise in mehreren Etagen in Rollenform aufgehängten Rohgummistreifen gemeinsam in die einzelnen Etagen der Vulkanisierpresse zieht. Im Zuge des Einziehens der Rohgummistreifen in die Presse berühren die Rohgummistreifen, die ein erhebliches Gewicht aufweisen können, die Formen, so dass erhebliche Reibungskräfte zwischen den Rohgummistreifen und den Formen entstehen. Aufgrund der Reibungskräfte kommt es in der Praxis zu einer Längung und folglich Einschnürung der Rohgummistreifen. Die dabei entstehenden "Verluste" in Höhe und Breite müssen berücksichtigt und bei der Dimensionierung der Rohgummistreifen hinzugerechnet werden, so dass es beim Verpressen zu erheblichen Materialverlusten kommt, die dann als Austrieb (Flush) verlorengehen. Die Wirtschaftlichkeit der bekannten Vulkanisierpressenanlagen wird durch diese Nachteile begrenzt.

Es wurde daher bereits vorgeschlagen, zusätzlich zu dem Beladearm, welcher die Rohgummistreifen in die Presse einzieht, einen weiteren Arm als gleichsam Unterstützungsarm vorzusehen, wobei der Beladearm und der Unterstützungsarm mit unterschiedlichen Geschwindigkeiten verfahrbar sind. Eine solche Vorrichtung ist beispielsweise aus der US 2007/0023963 A1 bekannt. Die Reibungskräfte lassen sich auf diese Weise verringern, es verbleiben jedoch nach wie vor nicht unerhebliche Reibungskräfte, so dass nach wie vor Materialverluste in Kauf genommen werden müssen.

Ausgehend von dieser Problematik liegt der Erfindung die Aufgabe zugrunde, eine Vulkanisierpressenanlage zu schaffen, welche bei einfachem Aufbau eine besonders wirtschaftliche Herstellung von Laufstreifen für die Runderneuerung von Reifen ermöglicht.

Zur Lösung dieser Aufgabe lehrt die Erfindung bei einer gattungsgemäßen Vulkanisierpresse für die Herstellung von Laufstreifen für die Runderneuerung von Reifen, dass die Beschickvorrichtung zumindest einen in Pressenlängsrichtung verfahrbaren Beschickwagen aufweist, welcher in einer oder mehreren Etagen ein oder mehrere Beladetabletts mit jeweils einem endlos umlaufenden Transportband aufweist, wobei der Beschickwagen mit den auf den Beladetabletts angeordneten Laufstreifen in Arbeitsrichtung in die Vulkanisierpresse einfahrbar und entgegen der Arbeitsrichtung aus der Presse ausfahrbar ist.

Die Erfindung geht dabei von der Erkenntnis aus, dass die bislang beim Beschicken der Vulkanisierpresse erforderlichen Zugkräfte in den Rohgummistreifen und damit mechanische Spannungen der Rohgummistreifen eliminiert werden können, wenn die Rohgummistreifen nicht unter Inkaufnahme von Reibungskräften in die einzelnen Etagen eingezogen, sondern im Sinne einer Tablettbeschickung bzw. Tablettbeladung mit einem hin- und herfahrbaren Beschickwagen in die Presse eingebracht werden. Eine Tablettbeschickung mit Beschicktabletts mit endlos umlaufenden Transportbändern kommt in ähnlicher Form bei der Herstellung von Holzwerkstoffplatten zum Einsatz (siehe DE 2 550 607 A1). Solche Anlagen mit Beschicktabletts für die Beschickung von Etagenpressen im Zuge der Herstellung von Holzwerkstoffplatten hatten jedoch auf die Entwicklung von Vulkanisierpressenanlagen keinen Einfluss. Im Rahmen der Erfindung kann nun teilweise auf die bekannten Erkenntnisse aus den Mehretagen-Holzwerkstoffpressenanlagen mit Bandtablettbeschickung zurückgegriffen werden.

Vorteilhafte Weiterbildung der Erfindung werden im Folgenden erläutert. So besteht im Rahmen der Erfindung die Möglichkeit, dass der in die Vulkanisierpresse eingefahrene und mit Rohgummistreifen belegte Beschickwagen zum Ablegen der Rohgummistreifen in der Presse entgegen der Arbeitsrichtung zurückfahrbar ist, wobei die endlos umlaufenden Transportbänder während des Zurückfahrens des Beschickwagens angetrieben sind und besonders bevorzugt mit dem zurückfahrenden Beschickwagen (gegenläufig) synchronisiert sind. Durch eine solche Synchronisation der Transportbandgeschwindigkeit mit der Geschwindigkeit des Beschickwagens können die Rohgummibahnen relativ zu der Presse stillstehend in der Presse und folglich auf den Formen abgelegt werden, so dass Reibungskräfte vermieden und die Rohgummibahnen ohne störende Zugkräfte in die Presse eingebracht werden können. Folglich kommt es auch nicht zu unverwünschten Längungen und damit Einschnürungen der Rohgummistreifen, so dass die bislang auftretenden Verluste vollständig oder nahezu vollständig vermieden werden können.

Die angetriebenen Transportbänder des Beschickwagens ermöglichen nicht nur ein einwandfreies Ablegen der Rohgummistreifen in der Presse, sondern auch das Beladen des Beschickwagens selbst mit den Rohgummistreifen kann reibungs- bzw. spannungsfrei erfolgen.

Dieses lässt sich in einer ersten Ausführungsform beispielsweise dadurch realisieren, dass die Beschickvorrichtung zumindest einen verfahrbaren Beladearm aufweist, mit welchem ein oder mehrere Rohgummistreifen zum Beladen des Beschickwagens in den Beschickwagen einziehbar und auf den Beladetabletts ablegbar sind, wobei die Transportbänder der Beladetabletts derart mit dem in den Beschickwagen einfahrenden Beladearm synchronisiert sind, dass die Rohgummistreifen auf dem sich bewegenden Transportband abgelegt werden. So besteht beispielsweise die Möglichkeit, die Transportbänder mit dem Beladearm derart zu synchronisieren, dass die Geschwindigkeit des vorfahrenden Beladearms mit der Geschwindigkeit der Transportbänder übereinstimmt. Dadurch wird es möglich, den Beschickwagen reibungsfrei mit Rohgummistreifen zu beladen. Anschließend lässt sich der beladene Beschickwagen - wie zuvor beschrieben - in die Presse einfahren. Diese Art der Beladung des Beschickwagens mit einem Beladarm ist insbesondere dann zweckmäßig, wenn die Rohgummistreifen in Rollenform vorliegen und während des Beladens von diesen Rollen abgezogen werden.

Es versteht sich, dass der Beschickwagen zum Vorfahren in Arbeitsrichtung in die Presse und zum Zurückfahren einen Beschickantrieb aufweist. Die Beladetabletts weisen ein oder mehrere Transportantriebe für die Transportbänder auf, wobei jedes einzelne Beladetablett einen eigenen Transportantrieb oder auch mehrere oder sämtliche Beladetabletts einen gemeinsamen Transportantrieb aufweisen können. Ferner ist ein Beladeantrieb zum Verfahren des ggf. vorhandenen Beladearms relativ zu dem Beschickwagen vorgesehen. Bevorzugt weist die Beschickvorrichtung eine Steuervorrichtung auf, mit welcher der Beschickantrieb, der Transportantrieb und/oder der eventuell vorhandene Beladeantrieb steuerbar sind. Auf diese Weise gelingt eine einfache Synchronisation bzw. Abstimmung der einzelnen Bewegungen.

Der Beschickwagen ist vorzugsweise an zumindest einer oberen und/oder einer unteren Führungsschiene geführt. Der Beladearm ist vorzugsweise an zumindest einer oberen und/oder zumindest einer unteren Führungsschiene geführt. Im Übrigen weist eine solche Pressenanlage in der Regel zusätzlich eine der Vulkanisierpresse nachgeordnete Entleervorrichtung auf, welche beispielsweise einen verfahrbaren Entleerarm aufweist, der die fertigen Laufstreifen nach der Vulkanisation aus der Presse zieht. Der Presse kann dann beispielsweise in einer Kühlzone ein Kühlregal mit ebenfalls mehreren Etagen nachgeordnet sein. Auch der Entleerarm oder Entleerwagen ist an zumindest einer oberen und/oder zumindest einer unteren Führungsschiene geführt. Es besteht dabei die Möglichkeit, dass gemeinsame Führungsschienen für z. B. den Beschickwagen und den Entleerarm und/oder den Beladearm vorgesehen sind.

Es liegt grundsätzlich im Rahmen der Erfindung, dass die Rohgummistreifen in an sich bekannter Weise in Rollenform zugeführt werden. Dann sind in mehreren Etagen Rohgummistreifen in Rollenform aufgehängt, und zwar vor dem Beschickwagen, so dass beispielsweise der Beladearm die Rohgummistreifen abwickelt und in den Beschickwagen einzieht. Bei einer solchen ersten Ausführungsform ist folglich vorzugsweise der Beladearm vorgesehen.

Alternativ schlägt die Erfindung in einer zweiten Ausführungsform vor, dass der Beschickvorrichtung zumindest eine Extrusionsvorrichtung vorgeordnet ist, mit welcher die Rohgummistreifen unmittelbar vor dem Beschicken erzeugt werden, wobei zwischen der Extrusionsvorrichtung und dem Beschickwagen ein höhenverstellbarer Zuförderer angeordnet ist. Diese Ausführungsform der Erfindung hat den Vorteil, dass die extrudierten Laufstreifen nicht zunächst gekühlt, aufgewickelt und gelagert werden müssen, sondern dass die Erzeugung der Laufstreifen in den Beschickprozess integriert wird. Damit lassen sich die in der Praxis ggf. auftretenden Probleme beim Extrudieren, Kühlen und Aufwickeln der Rohgummistreifen vermeiden. Außerdem lässt sich die Wärme aus dem Extrusionsvorgang in der Presse nutzen, so dass eine Heizzeitverkürzung möglich ist.

Diese Integration des Extrusionsprozesses in den Beschickprozess ist in Kombination mit dem erfindungsgemäß vorgesehenen Beschickwagen möglich, da aufgrund der Tablettbeschickung eine Entkopplung zwischen Extrusion einerseits und Beschickung andererseits erfolgt. Es besteht die Möglichkeit, zunächst Etage für Etage des Beschickwagens mit Hilfe des höhenverstellbaren Zuförderers, der auch als Tippel bezeichnet wird, zu beladen und anschließend den vollständig beladenen Beschickwagen in die Presse einzufahren. Dabei liegt es im Rahmen der Erfindung, dass der höhenverstellbare und/oder schwenkbare Zuförderer, der ebenfalls ein endlos umlaufendes Transportband aufweist, direkt die Rohgummibahn in jede Etage des Beschickwagens fördert. Auf einen zusätzlichen, verfahrbaren Beladearm kann bei dieser zweiten Ausführungsform verzichtet werden.

Insgesamt kommt der Beschickvorrichtung im Rahmen der Erfindung besondere Bedeutung zu. Die Beschickvorrichtung für eine solche Vulkanisierpressenanlage wird daher auch selbständig unter Schutz gestellt.

Gegenstand der Erfindung ist ferner ein Verfahren zum Beschicken einer Vulkanisierpresse in einer Vulkanisierpressenanlage der beschriebenen Art. Dieses Verfahren ist dadurch gekennzeichnet, dass der mit den Rohgummistreifen beladene Beschickwagen zum Ablegen der Rohgummistreifen in der Presse (entgegen der Arbeitsrichtung) zurückgefahren wird und dass die Transportbänder während des Zurückfahrens mit einer Geschwindigkeit angetrieben werden, welche - in entgegengesetzter Richtung - der Geschwindigkeit des zurückfahrenden Beschickwagens entspricht, so dass die Rohgummistreifen während des Ablegens relativ zu der Presse stillstehen. Auf diese Weise wird ein reibungsfreies bzw. zugkräftefreies Ablegen der Rohgummistreifen in der Presse ermöglicht. Der Beschickwagen lässt sich auch reibungsfrei und zugkräftefrei mit den Rohgummistreifen beladen. Dazu schlägt die Erfindung z. B. vor, dass die Rohgummistreifen mit einem verfahrbaren Beladearm in den Beschickwagen eingezogen werden, wobei die Transportbänder während des Einziehens der Rohgummistreifen mit einer Geschwindigkeit angetrieben werden, welche der Geschwindigkeit des vorfahrenden Beladearms entspricht. Optional kann dieses Beladen des Beschickwagens mit einem Zuförderer erfolgen, insbesondere wenn die Rohgummistreifen unmittelbar vor dem Beladen in einer Extrusionsvorrichtung erzeugt werden.

Im Folgenden wird die Erfindung anhand einer lediglich ein Ausführungsbeispiel darstellenden Zeichnung näher erläutert. Es zeigen
- Fig. 1: eine erste Ausführungsform einer erfindungsgemäßen Vulkanisierpressenanlage in einer Seitenansicht,
- Fig. 2: einen Schnitt durch den Gegenstand nach Fig. 1 im Bereich der Presse,
- Fig. 3: einen Schnitt durch den Gegenstand nach Fig. 1 im Bereich des Beschickwagens,
- Fig.4: eine abgewandelte zweite Ausführungsform.

In den Figuren ist eine Vulkanisierpressenanlage für die Herstellung von Laufstreifen für die Runderneuerung von Reifen dargestellt. Es handelt sich um eine Vulkanisierpressenanlage für die Kaltrunderneuerung von beispielsweise LKW-Reifen.

Eine solche Vulkanisierpressenanlage weist eine Vulkanisierpresse 1 mit einem Pressengestell 2 auf, welches im Ausführungsbeispiel als Doppel-C-Gestell mit einer zweiseitig offenen Maulkonstruktion ausgebildet ist, welches sich gleichsam aus zwei rückseitig miteinander verbundenen C-Gestellen zusammensetzt. Die Vulkanisierpresse weist mehrere Pressenetagen 3 auf, in denen jeweils die beheizten Formen für die Reifenprofile angeordnet sind. Die Pressenetagen 3 werden gemeinsam mit mehreren in Pressenlängsrichtung hintereinander angeordneten Zylinderkolbenanordnungen 5 beaufschlagt. In der Vulkanisierpresse 1 werden aus Rohgummistreifen Laufstreifen mit einem Reifenprofil gepresst.

Ferner weist die Vulkanisierpressenanlage in jedem der beiden C-Gestelle jeweils eine Beschickvorrichtung 6 für die Beschickung der Vulkanisierpresse 1 mit den Rohgummistreifen auf. Auch wenn in den Figuren ein Ausführungsbeispiel mit zweiseitig offener Maulkonstruktion dargestellt ist, so umfasst die Erfindung in entsprechender Weise auch Pressen mit einseitig offener Maulkonstruktion, wobei dann nicht mehrere Beschickvorrichtungen, sondern lediglich eine einzige Beschickvorrichtung erforderlich ist.

Erfindungsgemäß weist die Beschickvorrichtung 6 einen in Pressenlängsrichtung verfahrbaren Beschickwagen 7 auf, welcher in mehreren Etagen Beladetabletts 8 aufweist, wobei jedes Beladetablett ein endlos umlaufendes Transportband 9 aufweist.

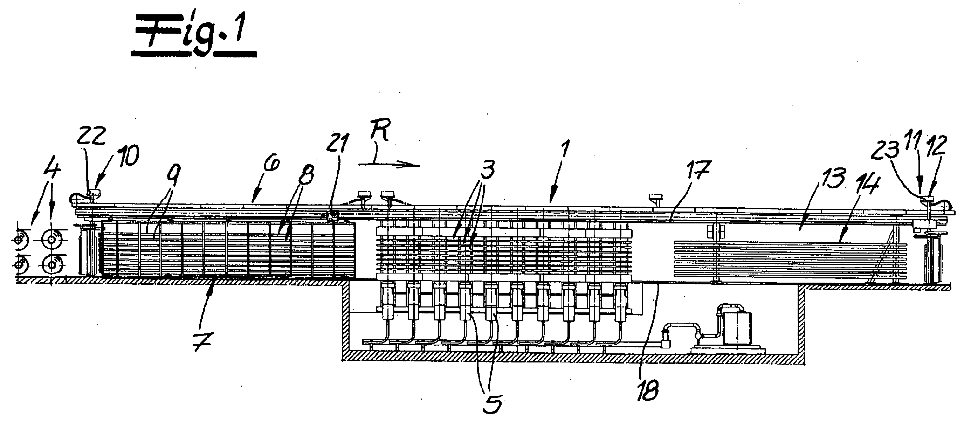

In dem in Fig. 1 dargestellten Ausführungsbeispiel weist die Beschickvorrichtung 6 ferner einen Beladearm 10 auf. Mit diesem Beladearm 10 sind die Rohgummistreifen zum Beladen des Beschickwagens 7 in den Beschickwagen 7 einziehbar und auf den Beladetabletts 8 ablegbar.

Die Beschickung der Vulkanisierpresse 1 mit der erfindungsgemäßen Beschickvorrichtung 6 erfolgt nun wie folgt:
Der Beschickwagen 7 befindet sich in der Fig. 1 dargestellten Ausgangsstellung außerhalb der Vulkanisierpresse, nämlich in Arbeitsrichtung R vor der Vulkanisierpresse. Der lediglich angedeutete Beladearm 10 befindet sich eingangsseitig vor dem Beschickwagen 7. In Fig. 1 ist dabei angedeutet, dass die Rohgummibahnen in Rollenform in mehreren Etagen eingangsseitig vor dem Beschickwagen 7 angeordnet sind. Einige dieser Rollen 4 sind lediglich beispielhaft angedeutet. Aufbau und Funktionsweise des Beladearms 10 sind grundsätzlich bekannt, denn mit einem solchen Beladearm wurden in der Praxis die bekannten Vulkanisierpressen ohne Beschickwagen direkt beschickt. Die Anfänge der aufgerollten Rohgummistreifen werden Etage für Etage an dem Beladearm 10 befestigt. Anschließend fährt der Beladearm 10 in Arbeitsrichtung R in den Beschickwagen 7, wickelt dabei die aufgerollten Rohgummistreifen ab und zieht sie in mehreren Etagen in den Beschickwagen 7. Während des Vorfahrens des Beladearms 10 werden die Transportbänder 9 der Beladetabletts 8 angetrieben, und zwar in Arbeitsrichtung R. Die Transportbänder 9 werden dabei mit dem vorfahrenden Beladearm 10 synchronisiert, d. h. die Transportbänder 9 werden mit einer Geschwindigkeit angetrieben, welche der Geschwindigkeit des vorfahrenden Beladearms 10 entspricht. Dieses ermöglicht es, dass die Beladetabletts 8 die Rohgummistreifen beim Beladen reibungsfrei aufnehmen. Sobald der Beschickwagen 7 mit den Rohgummistreifen beladen ist, stoppen sowohl der Beladearm 10 als auch die Transportbänder 9.

Nun kann der gesamte Beschickwagen 7 in die Vulkanisierpresse 1 eingefahren werden, und zwar in Arbeitsrichtung R. Während dieses Einfahrens des Beschickwagens 7 in die Presse 1 werden die Transportbänder 9 der Beladetabletts 8 (noch) nicht angetrieben. Nachdem der Beschickwagen 7 nämlich vollständig in die Vulkanisierpresse 1 eingefahren wurde, wird der Beschickwagen 7 anschließend wieder entgegen der Arbeitsrichtung R zurückgefahren. Während des Zurückfahrens werden nun jedoch die Transportbänder 9 der Beladetabletts 8 angetrieben, und zwar wiederum in Arbeitsrichtung R. Durch das "gegenläufig" synchronisierte Verfahren des Beschickwagens 7 einerseits und der Transportbänder 9 andererseits werden die Rohgummistreifen reibungsfrei in der Vulkanisierpresse 1 abgelegt, denn die Rohgummibahnen werden - relativ zu der Presse - stillstehend auf bzw. in den Formen abgelegt.

Nach dem Verpressen und folglich vulkanisieren der Rohgummistreifen zu den Laufstreifen werden die Laufstreifen aus der Vulkanisierpresse 1 entnommen. Dazu ist in an sich bekannter Weise eine Entleervorrichtung 11 mit einem hin- und herfahrbaren Entleerarm 12 vorgesehen. Der eingangs erwähnte Beladearm 10 entspricht in Aufbau und Funktionsweise dem in Fig. 1 dargestellten Entleerarm 12.

Mit Hilfe der Entleervorrichtung 11 werden die vulkanisierten Laufstreifen mit dem Reifenprofil aus der Vulkanisierpresse herausgezogen und in einer Abkühlzone 13 abgelegt, welche ein Kühlregal 14 mit ebenfalls mehrere Etagen aufweist.

Um die einzelnen Komponenten der Anlage in der beschriebenen Weise antreiben bzw. verfahren zu können, sind verschiedene Antriebe vorgesehen, welche in der beschriebenen Weise miteinander synchronisierbar sind, z. B. über eine gemeinsame Steuervorrichtung, die jedoch in den Figuren nicht dargestellt ist. So ist grundsätzlich ein Beschickantrieb 21 für den Beschickwagen 7 vorgesehen, wobei der Beschickwagen 7 mit Hilfe dieses Beschickantriebes hin- und herfahrbar ist. Ferner ist ein Beladeantrieb 22 für den Beladearm 10 sowie ein Entleerantrieb 23 für den Entleerarm 12 vorgesehen. Außerdem können ein oder mehrere Transportantriebe für die Transportbänder 9 der Beladetabletts 8 vorgesehen sein.

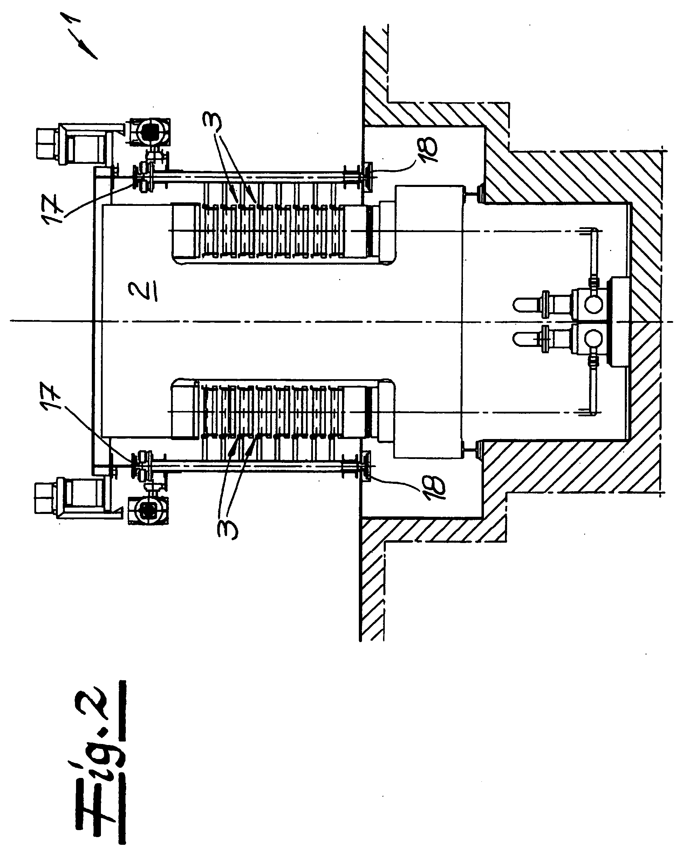

Der Beschickwagen 7 kann an einer oberen und einer unteren Führungsschiene 17, 18 geführt sein. Der Beladearm 10 kann ebenfalls an einer oberen und einer unteren Führungsschiene 19, 20 geführt sein. Ebenso kann der Entleerarm 12 an einer oberen und einer unteren Führungsschiene 17, 18 geführt sein. Im Ausführungsbeispiel sind jedoch eine obere und eine untere durchgehende Führungsschiene 17, 18 vorgesehen, an welchen sowohl der Beschickwagen 7 als auch der Entleerarm 12 verfahren werden, jedoch in unterschiedlichen Bereichen der Anlage. In Fig. 2 ist erkennbar, dass die Presse 1 auf der jeweils äußeren Seite offen ist. Der Beschickwagen 7 und auch der Entleerarm 12 sind jeweils auf dieser offenen (äußeren) Seite der Presse 2 verfahrbar. Daher sind auch die Führungsschienen 17, 18 auf dieser offenen (äußeren) Seite der Presse 1 angeordnet. Der Beschickwagen 7 weist dazu die Beladetabletts 8 auf, die lediglich einseitig aufgehängt sind, so dass sie mit ihren freien Enden, welche der Presse zugewandt sind, in die einzelnen Etagen 3 der Presse 2 eingreifen können.

Für den Beladearm 10 sind separate Führungsschienen 19, 20 vorgesehen. Der Beladearm 10 fährt dabei auf der der Presse zugewandten (inneren) Seite des Beschickwagens entlang. Dieses ist möglich, weil der Beladearm 10 nicht in dem Bereich der Presse fährt, sondern nur in einem Bereich vor der Presse, wenn nämlich der Beschickwagen aus der Presse herausgefahren ist.

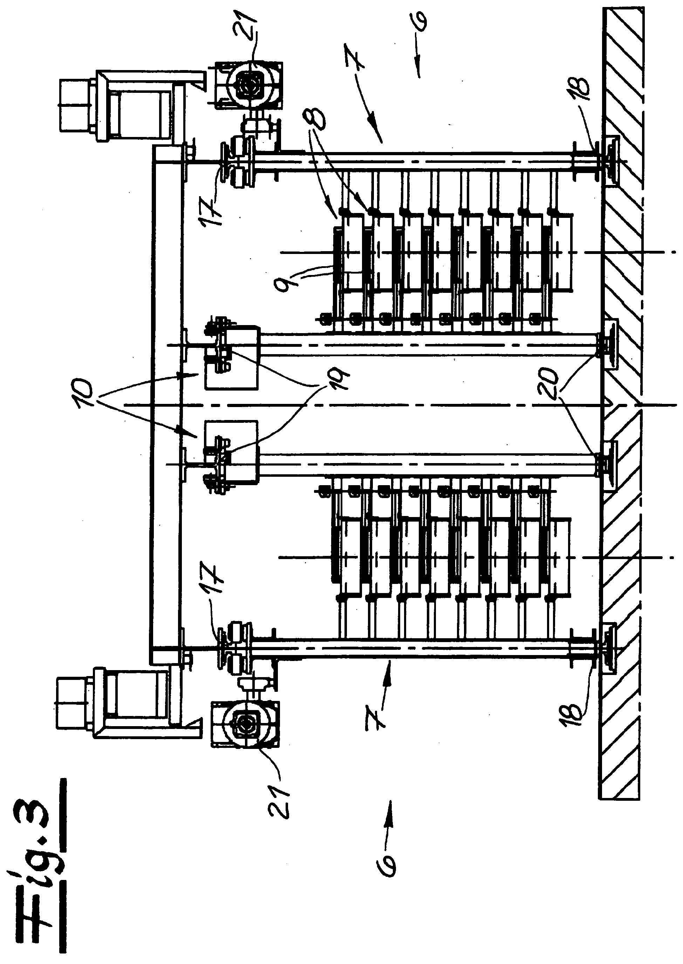

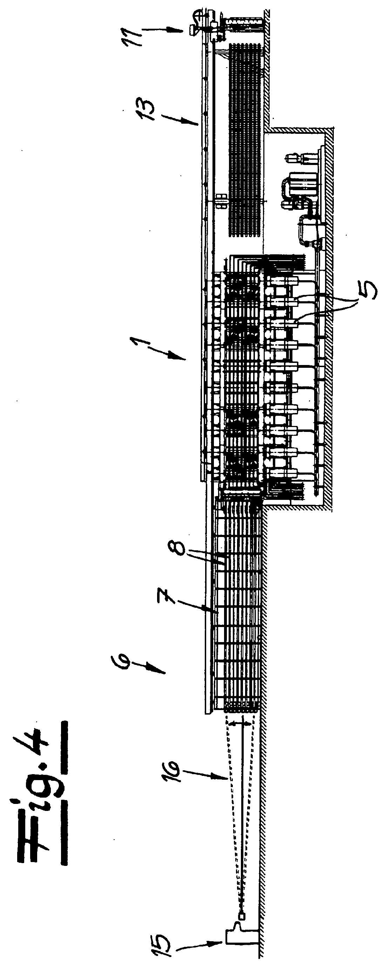

Fig. 4 zeigt eine abgewandelte zweite Ausführungsform der Erfindung, bei welcher die Rohgummistreifen nicht in Rollenform vorliegen, sondern bei welcher die Rohgummistreifen mit Hilfe einer Extrusionsvorrichtung 15 unmittelbar vor der Beschickung hergestellt werden. Bei dem in Fig. 4 dargestellten Ausführungsbeispiel ist der Beschickvorrichtung 6 folglich eine Extrusionsvorrichtung 15 vorgeordnet, mit welcher die Rohgummistreifen erzeugt werden. Zwischen der Extrusionsvorrichtung 15 und dem Beschickwagen 7 ist ein höhenverstellbarer Zuförderer 16 angeordnet, welcher ebenfalls zu einem umlaufenden Transportband ausgerüstet sein kann. Bei der in Fig. 4 dargestellten Ausführungsform besteht nun folglich die Möglichkeit, die Rohgummibahn unmittelbar vor der Beschickung zu erzeugen und dann mit dem höhenverstellbaren bzw. schwenkbaren Zuförderer 16, der auch als Tippel bezeichnet wird, in den Beschickwagen 7 einzubringen. Bei dieser Ausführungsform lässt sich die Wärme aus dem Extrusionsvorgang in der Vulkanisierpresse 1 nutzen, so dass eine Heizzeitverkürzung möglich wird. Für die Beladung des Beschickwagens 7 ist kein Beladearm erforderlich, da die einzelnen Rohgummistreifen unmittelbar von dem Zuförderer 16 an die einzelnen Förderer 9 der Tabletts 8 übergeben und von diesen übernommen werden. Sobald sämtliche Tabletts 8 beladen wurden, erfolgt dann die Beschickung der Presse, und zwar so wie es zu den Fig. 1 bis 3 erläutert wurde.

## Patentansprüche

1. Vulkanisierpressenanlage für die Herstellung von Laufstreifen für die Runderneuerung von Reifen,
mit einer Vulkanisierpresse (1) mit einem Pressengestell (2) und mit einer oder mehreren Pressenetagen (3), in welchen aus Rohgummistreifen Laufstreifen mit einem Reifenprofil gepresst werden, wobei in den Pressenetagen jeweils beheizbare Formen für das Reifenprofil angeordnet sind,
und mit zumindest einer Beschickvorrichtung (6) für die Beschickung der Vulkanisierpresse (1) mit den Rohgummistreifen, wobei die Beschickvorrichtung (6) zumindest einen in Pressenlängsrichtung verfahrbaren Beschickwagen (7) aufweist,
**dadurch gekennzeichnet,**
**dass** der Beschickwagen in einer oder mehreren Etagen ein oder mehrere Beladetabletts (8) mit jeweils einem endlos umlaufenden, angetriebenen Transportband (9) aufweist,
wobei der Beschickwagen (7) mit den auf den Beladetabletts (8) angeordneten Rohgummistreifen in Arbeitsrichtung (R) in die Vulkanisierpresse (1) einfahrbar ist.

2. Anlage nach Anspruch 1, **dadurch gekennzeichnet, dass** die Beschickvorrichtung (6) zumindest einen verfahrbaren Beladearm (10) aufweist, mit welchem ein oder mehrere Rohgummistreifen zum Beladen des Beschickwagens (7) in den Beschickwagen (7) einziehbar und auf den Beladetabletts (8) ablegbar sind,
wobei die Transportbänder (9) der Beladetabletts (8) derart mit dem in den Beschickwagen (7) einfahrenden Beladearm (10) synchronisiert sind, dass die Rohgummistreifen auf den sich bewegenden Transportbändern (9) abgelegt werden.

3. Anlage nach Anspruch 1 oder 2, **dadurch gekennzeichnet, dass** der in die Vulkanisierpresse (1) eingefahrene Beschickwagen (7) zum Ablegen der Rohgummistreifen in der Presse entgegen der Arbeitsrichtung (R) zurückfahrbar ist, wobei die Transportbänder (9) während des Zurückfahrens des Beschickwagens angetrieben sind und mit dem Beschickwagen gegenläufig synchronisiert.

4. Anlage nach Anspruch 3, **dadurch gekennzeichnet, dass** die Transportbänder beim Ablegen der Rohgummistreifen in der Presse (1) derart mit dem zurückfahrenden Beschickwagen (7) synchronisierbar sind, dass die Rohgummistreifen relativ zu der Presse (1) stillstehend abgelegt werden.

5. Anlage nach einem der Ansprüche 1 bis 4, **dadurch gekennzeichnet, dass** die Beschickvorrichtung (6) eine Steuervorrichtung aufweist, mit welcher der Beschickwagen (7), z. B. dessen Beschickantrieb, und die Transportbänder (9), z. B. deren Transportantriebe, und/oder der Beladearm (10), z. B. dessen Beladeantrieb, steuerbar sind.

6. Anlage nach einem der Ansprüche 1 bis 5, **dadurch gekennzeichnet, dass** der Beschickwagen (7) an zumindest einer oberen und/oder zumindest einer unteren Führungsschiene (17, 18) geführt ist.

7. Anlage nach einem der Ansprüche 1 bis 6, **dadurch gekennzeichnet, dass** der Beladearm (10) an zumindest einer oberen und/oder zumindest einer unteren Führungsschiene (19, 20) geführt ist.

8. Anlage nach einem der Ansprüche 1 bis 7, **dadurch gekennzeichnet, dass** der Beschickvorrichtung (6) zumindest eine Extrusionsvorrichtung (15) vorgeordnet ist, mit welcher die Rohgummistreifen erzeugt werden, wobei zwischen der Extrusionsvorrichtung (15) und dem Beschickwagen (7) ein höhenverstellbarer Zuförderer (16) angeordnet ist.

9. Verfahren zum Beschicken einer Vulkanisierpresse (1) in einer Vulkanisierpressenanlage nach einem der Ansprüche 1 bis 8, **dadurch gekennzeichnet, dass** der mit den Rohgummistreifen beladene Beschickwagen (7) zum Ablegen der Rohgummistreifen in der Presse (1) zurückgefahren wird und
dass die Transportbänder (9) während des Zurückfahrens mit einer Geschwindigkeit angetrieben werden, welche der Geschwindigkeit des zurückfahrenden Beschickwagens entspricht, so dass die Rohgummistreifen während des Ablegens relativ zu der Presse (1) stillstehen.

10. Verfahren nach Anspruch 9, **dadurch gekennzeichnet, dass** die Rohgummistreifen mit einem Beladearm (10) in den Beschickwagen (7) eingezogen werden, wobei die Transportbänder (9) während des Einziehens der Rohgummistreifen mit einer Geschwindigkeit angetrieben werden, welche der Geschwindigkeit des vorfahrenden Beladearms (10) entspricht.

11. Verfahren nach Anspruch 9, **dadurch gekennzeichnet, dass** die Rohgummistreifen unmittelbar vor dem Beschicken der Presse (1) erzeugt und dem Beschickwagen (7) mittels eines Zuförderers (16) mit endlos umlaufenden Transportband zugeführt werden.

## Claims

1. A vulcanising press facility for the manufacture of running strips for the retreading of tyres,
with a vulcanising press (1) with a press frame (2) and with one or a plurality of press stages (3), in which running strips with a tyre profile are pressed out of raw rubber strips, wherein heatable moulds for the tyre profile are arranged in each of the press stages,
and with at least one feeder device (6) for feeding the vulcanising press (1) with the raw rubber strips, wherein the feeder device (6) has at least one feeder carriage (7) that can be traversed in the longitudinal direction of the press,
**characterised in that**
the feeder carriage in one or a plurality of stages has one or a plurality of loading trays (8), in each case with a continuously circulating driven conveyor belt (9), wherein
the feeder carriage (7) with the raw rubber strips arranged on the loading tray (8) can be traversed into the vulcanising press (1) in the operational direction (R).

2. The facility in accordance with claim 1, **characterised in that** the feeder device (6) has at least one traversable loading arm (10), with which for purposes of loading the feeder carriage (7) one or a plurality of raw rubber strips can be moved into the feeder carriage (7) and can be laid down on the loading tray (8), wherein
the conveyor belts (9) of the loading trays (8) are synchronised with the loading arm (10) traversing into the feeder carriage (7) such that the raw rubber strips are laid down on the moving conveyor belts (9).

3. The facility in accordance with claim 1 or 2, **characterised in that** the feeder carriage (7) that has traversed into the vulcanising press (1) for purposes of laying the raw rubber strips in the press can be traversed backwards against the operational direction (R), wherein during the backwards traverse of the feeder carriage the conveyor belts (9) are driven and are synchronised with the feeder carriage in a contrary direction.

4. The facility in accordance with claim 3, **characterised in that** during the laying down of the raw rubber strips in the press (1) the conveyor belts can be synchronised with the feeder carriage (7) traversing backwards, such that the raw rubber strips are laid down in a stationary manner relative to the press (1).

5. The facility in accordance with one of the claims 1 to 4, **characterised in that** the feeder device (6) has a control device, with which the feeder carriage (7), e.g. its feeder drive, and the conveyor belts (9), e.g. their conveyor drives, and/or the loading arm (10), e.g. its loading drive, can be controlled.

6. The facility in accordance with one of the claims 1 to 5, **characterised in that** the feeder carriage (7) is guided on at least one upper, and/or at least one lower, guide rail (17, 18).

7. The facility in accordance with one of the claims 1 to 6, **characterised in that** the loading arm (10) is guided on at least one upper, and/or at least one lower, guide rail (19, 20).

8. The facility in accordance with one of the claims 1 to 7, **characterised in that** at least one extrusion device (15) is arranged upstream of the feeder device (6), with which the raw rubber strips are generated, wherein a height-adjustable (16) feeder conveyor is arranged between the extrusion device (15) and the feeder carriage (7).

9. A method for feeding a vulcanising press (1) in a vulcanising press facility in accordance with one of the claims 1 to 8, **characterised in that** the feeder carriage (7), loaded with the raw rubber strips for purposes of laying down the raw rubber strips in the press (1), is traversed backwards,
and **in that** during the backwards traverse the conveyor belts (9) are driven with a velocity that corresponds to the velocity of the backwards traversing feeder carriage, so that during the laying down process the raw rubber strips are stationary relative to the press (1).

10. The method in accordance with claim 9, **characterised in that** the raw rubber strips are moved into the feeder carriage (7) using a loading arm (10), wherein during the moving-in process the conveyor belts (9) are driven with a velocity that corresponds to the velocity of the forwards traversing loading arm (10).

11. The method in accordance with claim 9, **characterised in that** the raw rubber strips are generated immediately before the feeding of the press (1), and are supplied to the feeder carriage (7) by means of a feeder conveyor (16) with a continuously circulating conveyor belt.

## Revendications

1. Installation de presse à vulcaniser pour la fabrication de bandes pour le rechapage de pneus,
comprenant une presse à vulcaniser (1) avec un châssis de presse (2) et un ou plusieurs étage(s) de presse (3) dans lesquels des bandes de bande de caoutchouc sont comprimées avec une sculpture de pneu, sachant que des formes respectives pouvant être chauffées pour la sculpture de pneu sont disposées dans les étages de la presse,
et comprenant au moins un dispositif d'alimentation (6) pour alimenter la presse à vulcaniser (1) en bandes de caoutchouc, sachant que le dispositif d'alimentation (6) présente au moins un chariot d'alimentation (7) pouvant être déplacé dans le sens longitudinal de la presse,
**caractérisé en ce que**
le chariot d'alimentation dans un ou plusieurs étages présente un ou plusieurs plateaux de chargement (8) avec respectivement une bande de transport (9) circulaire sans fin entraînée,
sachant que le chariot d'alimentation (7) peut être rentré dans la presse à vulcaniser (1) dans le sens de travail (R) avec les bandes de caoutchouc disposées sur le plateau de chargement (8).

2. Installation selon la revendication 1, **caractérisée en ce que** le dispositif d'alimentation (6) présente au moins un bras de chargement mobile (10) avec lequel une ou plusieurs bandes de caoutchouc peuvent être entrées dans le chariot d'alimentation (7) pour charger le chariot d'alimentation (7), et déposées sur le plateau de chargement (8),
sachant que les bandes de transport (9) du plateau de chargement (8) sont ainsi synchronisées avec le bras de chargement (10) entrant dans le chariot d'alimentation (7), que les bandes de caoutchouc sont déposées sur les bandes de transport (9) en déplacement.

3. Installation selon la revendication 1 ou 2, **caractérisée en ce que** le chariot d'alimentation (7) entré dans la presse à vulcaniser (1) peut être ramené en arrière contre le sens de travail (R) pour déposer les bandes de caoutchouc dans la presse, sachant que les bandes de transport (9) sont entraînées pendant le retour du chariot d'alimentation et synchronisées en sens opposé avec le chariot d'alimentation.

4. Installation selon la revendication 3, **caractérisée en ce que** les bandes de transport peuvent être synchronisées avec le chariot d'alimentation (7) en marche arrière de telle façon lors de la dépose des bandes de caoutchouc dans la presse (1), que les bandes de caoutchouc sont déposées à l'arrêt par rapport à la presse (1).

5. Installation selon l'une des revendications 1 à 4, **caractérisée en ce que** le dispositif d'alimentation (6) présente un dispositif de commande, avec lequel le chariot d'alimentation (7), par ex. son entraînement d'alimentation, et les bandes de transport (9), par ex. leurs entraînements de transport, et/ou le bras de chargement (10), par ex. son entraînement de chargement, peuvent être commandés.

6. Installation selon l'une des revendications 1 à 5, **caractérisée en ce que** le chariot d'alimentation (7) est dirigé sur au moins un rail de guidage supérieur (17) et/ou au moins un rail de guidage inférieur (18).

7. Installation selon l'une des revendications 1 à 6, **caractérisée en ce que** le bras de chargement (10) est dirigé sur au moins un rail de guidage supérieur (19) et/ou au moins un rail de guidage inférieur (20).

8. Installation selon l'une des revendications 1 à 7, **caractérisée en ce qu'**au moins un dispositif d'extrusion (15) est monté en aval du dispositif d'alimentation (6), avec lequel les bandes de caoutchouc sont produites, sachant qu'un transport d'alimentation (16) réglable en hauteur est disposé entre le dispositif d'extrusion (15) et le chariot d'alimentation (7).

9. Procédé d'alimentation d'une presse à vulcaniser (1) dans une installation de presse à vulcaniser selon l'une des revendications 1 à 8, **caractérisé en ce que** le chariot d'alimentation (7) chargé des bandes de caoutchouc est renvoyé dans la presse (1) pour déposer les bandes de caoutchouc et
que les bandes de transport (9) sont entraînées pendant le retour à une vitesse qui correspond à la vitesse du chariot d'alimentation effectuant une marche arrière, de telle sorte que les bandes de caoutchouc sont à l'arrêt par rapport à la presse (1) pendant la dépose.

10. Procédé selon la revendication 9, **caractérisé en ce que** les bandes de caoutchouc sont entrées dans le chariot d'alimentation (7) avec un bras de chargement (10), sachant que les bandes de transport (9) sont entraînées pendant l'entrée des bandes de caoutchouc à une vitesse qui correspond à la vitesse du bras de chargement (10) s'avançant.

11. Procédé selon la revendication 9, **caractérisé en ce que** les bandes de caoutchouc sont produites directement avant l'alimentation de la presse (1) et amenées au chariot de transport (7) au moyen d'un transport d'alimentation (16) comprenant une bande de transport circulaire sans fin.
